Europäisches Patentamt

European Patent Office

Office européen des brevets

(11) Veröffentlichungsnummer: **0 152 817**
**A1**

(12) # EUROPÄISCHE PATENTANMELDUNG

(21) Anmeldenummer: 85100853.2

(51) Int. Cl.⁴: **B 60 R 25/10, H 01 H 35/14**

(22) Anmeldetag: 28.01.85

(30) Priorität: 07.02.84 DE 3404182

(43) Veröffentlichungstag der Anmeldung: 28.08.85
Patentblatt 85/35

(84) Benannte Vertragsstaaten: **AT BE CH FR GB IT LI NL SE**

(71) Anmelder: **Trebe-Elektronik GbR, Am Hüttenfeld 4,
D-6336 Solms (DE)**

(72) Erfinder: **Troussas, Joannis, Dipl.-Ing.,
Dreieichenweg 17, D-6333 Braunfels-Bonbaden (DE)**

(74) Vertreter: **Riecke, Manfred, Neuköllner Strasse 8,
D-6333 Braunfels (DE)**

(54) Rüttelkontakt und damit ausgerüstete Alarmanlage.

(57) Es wird ein Rüttelkontakt offenbart, der aus einer Lichtquelle (1), einem lichtempfindlichen Empfänger (2) und einem dazwischen angeordneten, teilweise mit Flüssigkeit gefüllten Behälter (3) besteht. Die Lichtstrahlen fallen teilweise durch die Flüssigkeit auf den Empfänger. Im Ruhezustand steht an den Ausgängen des Empfängers eine Spannung konstanter Höhe an. Wird an dem Kontakt gerüttelt, so gerät die Flüssigkeit in eine Wellenbewegung, und die Lichtstrahlen gelangen nun durch die Wellen zum Empfänger, an dem jetzt nicht mehr eine Spannung konstanter Höhe, sondern eine Spannung wechselnder Höhe ansteht. Mit dieser Spannung wechselnder Höhe wird ein Stromkreis (9) gesteuert, insbesondere wird damit der Stromkreis einer Alarmanlage z.B. in Kraftfahrzeugen ausgelöst.

- 1 -

Die Erfindung betrifft einen Rüttelkontakt zur Erzeugung eines elektrischen Signales in Abhängigkeit von einer plötzlichen Bewegung des Kontaktes.

Rüttelkontakte sind vor allem in Form von federgepufferten Kontakten und in Form von masseabhängigen Kontakten bekannt.

Die federgepufferten Kontakte sind relativ kompliziert in ihrem technischen Aufbau, daher auch relativ teuer, vor allem, wenn höhere Anforderungen an ihre Empfindlichkeit gestellt werden.
Masseabhängige Kontakte haben den Nachteil, daß sie in der Senkrechten ausgerichtet werden müssen und auf schräg stehenden Unterlagen oft nicht verwendbar sind.

Der Erfindung liegt die Aufgabe zugrunde, einen Rüttelkontakt anzugeben, der einfach im Aufbau, daher preisgünstig herstellbar und universell einsetzbar ist.

Diese Aufgabe ist durch einen Rüttelkontakt gelöst, der die im Anspruch 1 angegebenen Merkmale aufweist.

0152817

Der Grundgedanke des erfundenen Rüttelkontaktes besteht darin, zwischen einer Lichtquelle und einem Empfänger eine Flüssigkeit derart anzuordnen, daß mindestens beim Rütteln mindestens ein Teil der Lichtstrahlen durch die Flüssigkeit verläuft..Die Lichtstrahlen können dabei auch Strahlen aus dem nichtsichtbaren Wellenlängenbereich sein, d.h. IR- oder UV-Strahlen.

Bei einem solchen Kontakt erzeugen die auf den Empfänger fallenden Strahlen im Ruhezustand eine Spannung konstanter Höhe. Wird der Kontakt aber gerüttelt, so verlaufen die Strahlen pulsierend mehr oder weniger durch die Flüssigkeit, werden mehr oder weniger absorbiert und erzeugen daher im Empfänger eine in ihrer Höhe wechselnde Spannung. Diese in ihrer Höhe wechselnde Spannung kann nach Ausfilterung des Gleichspannungsanteiles als Signal zur Steuerung einer Schaltung für beliebige Zwecke verwendet werden.

Insbesondere wird vorgeschlagen, mit dem erfundenen Rüttelkontakt eine Alarmanlage zu betreiben, wobei in erster Linie daran gedacht ist, mit dem Kontakt eine Autoalarmanlage auszurüsten. Bei einer solchen Autoalarmanlage,die auf ein Rütteln am Fahrzeug anspricht, liegt es in der Natur der Sache, daß sie erst wirksam werden darf, wenn das Auto nach dem Aussteigen der Insassen zur Ruhe gekommen ist. Wenn somit die Alarmanlage unmittelbar vor dem Aussteigen eingeschaltet wird, so muß in der Schaltung ein Zeitverzögerungsglied enthalten sein, das die Anlage erst nach einem gewissen Zeitablauf, nämlich wenn das Auto nicht mehr wackelt, wirksam werden läßt.

Der Schalter kann aber auch außen verdeckt am Fahrzeug angebracht sein, so daß die Alarmanlage nach dem Aussteigen von außen eingeschltet werden kann.

Insbesondere wird jedoch vorgeschlagen, die Schaltung mittels Infrarotstrahlen ein- bzw. auszuschalten und zu diesem Zwecke in der Schaltung einen IR-Empfänger anzuordnen, der die gesamte Anlage in ihren Bereitschaftszustand versetzt. Dies geschieht mittels eines IR-Senders, der als kleines Taschengerät ausgebildet ist, das der Fahrzeugführer mit sich herumträgt.

In der Zeichnung ist die Erfindung in einem Ausführungsbeispiel dargestellt. Es zeigen:

Fig. 1a - 1d    den Rüttelkontakt in mehreren Betriebszuständen, und

Fig. 2          ein Blockschaltbild der Alarmanlage.

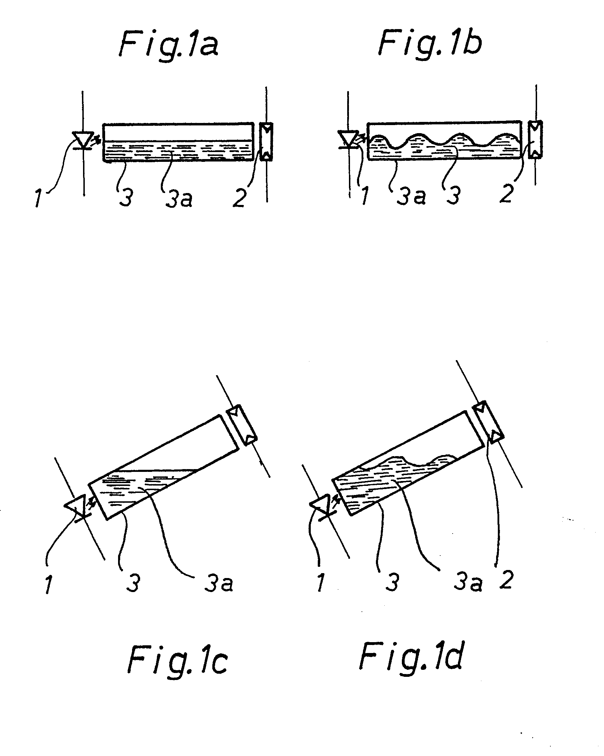

In den Fig. 1a-1d ist mit 1 eine LED bezeichnet, die vorzugsweise infrarotes Licht aussendet. Ihr gegenüber steht ein IR-Empfänger 2, der mindestens einen Teil der IR-Strahlen aufnimmt. Zwischen der LED 1 und dem Empfänger 2 ist ein Behälter 3 angeordnet, der teilweise mit einer Flüssigkeit 3a gefüllt ist.

Fig.1a zeigt die gesamte Anordnung im Ruhezustand. Die Oberfläche der Flüssigkeit 3a ist demzufolge eben, und es ist leicht erkennbar, daß die von der LED 1 ausgehenden Strahlen gleichmäßig auf den Empfänger 2 fallen, so daß an dessen Ausgängen eine konstante Spannung ansteht. Es ist dabei völlig unerheblich zu welchen Anteilen die Strahlen durch die Luft bzw. durch die Flüssigkeit zum Empfänger 2 verlaufen. Wichtig ist lediglich, daß sie in ihrer Gesamtheit den Empfänger 2 in der Weise beleuchten, daß von diesem die besagte konstante Spannung geliefert wird.

Dies ändert sich jedoch, wenn der Kontakt gerüttelt wird. Das Rütteln versetzt die Flüssigkeit 3a in Schwingungen, so daß abwechselnd einmal mehr und dann wieder weniger Strahlen durch die Flüssigkeit 3a bzw. durch die Luft zum Empfänger 2 gelangen. Die von letzterem gelieferte Spannung ist somit nicht mehr konstant sondern wechelt in ihrer Höhe, in Abhängigkeit von den Schwingungen der Flüssigkeit. Diese in ihrer Höhe wechselnde Spannung kann dazu benutzt werden, einen Stromkreis beliebiger Art zu steuern. Vorzugsweise ist allerdings daran gedacht, damit eine Alarmanlage, insbesondere in einem Kraftfahrzeug oder ähnlichem Fahrzeug auszulösen.

Es ist ein besonderer Vorteil des erfundenen Rüttelkontaktes, daß er unabhängig von seiner Lage im Raum, insbesondere unabhängig von einer horizontalen Ausrichtung arbeitet.

0152817

Dieser Vorteil besteht vor allen Dingen gegenüber den bekannten Rüttelkontakten, die mit der Trägheit einer Masse arbeiten und deswegen immer horizontal ausgerichtet sein müssen. Dieser Vorteil ist in den Fig.1c und 1d dargestellt. Es ist gut erkennbar, daß der Rüttelkontakt in beiden Figuren schräg steht. In Fig.1c befindet er sich jedoch in Ruhe, so daß immer ein gleichmäßiges Licht auf den Empfänger 2 fällt und an dessen Ausgängen eine konstant hohe Spannung ansteht. In Fig.1d wird der Kontakt gerüttelt, und die Wellen an der Flüssigkeitsoberfläche lassen abwechselnd mehr oder weniger Strahlen zum Empfänger. Der Vergleich der Fig.1a/1b mit den Fig.1c/1d macht deutlich, daß der erfundene Rüttelkontakt völlig lageunabhängig ist, und daß es für seine Funktion nur darauf ankommt, ob er sich in Ruhestellung befindet oder nicht.

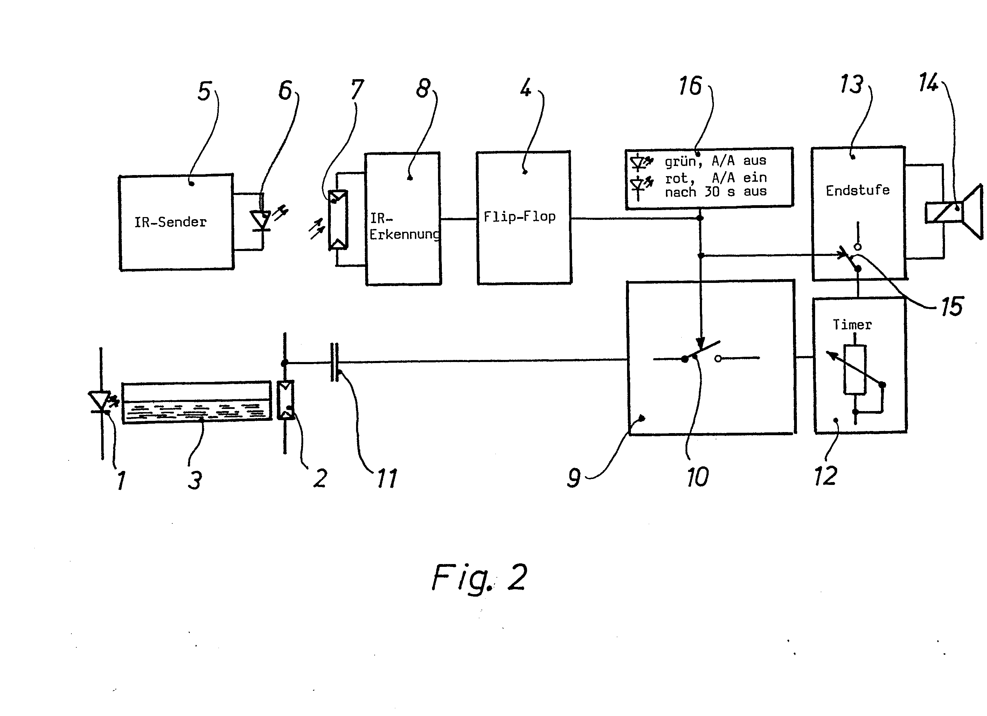

Fig.2 zeigt nun in einem Blockschaltbild die Verwendung des erfundenen Rüttelkontaktes in einer Autoalarmanlage mit IR-Steuerung. Mittels dieser IR-Steuerung kann die Alarmanlage ein- und ausgeschaltet werden. Während der Fahrt des Autos ist die Alarmanlage begreiflicherweise ausgeschaltet, denn sonst würde der Rüttelkontakt ständig tätig sein und den Alarm auslösen. Die Anlage darf daher nur eingeschaltet werden, nachdem das Auto nach Abstellen auf einem Standplatz zur Ruhe gekommen ist. D.h. das Einschalten der Anlage darf erst erfolgen, nachdem alle Insassen ausgestiegen und die Türen geschlossen sind, denn auch das Zuklappen der Türen bedeutet ein Rütteln des Fahrzeuges und würde den Alarm auslösen.

Das Einschalten der Alarmanlage kann daher nur von außerhalb des Fahrzeuges geschehen, beispielsweise durch einen außen versteckt angebrachten Schalter. Gemäß der Erfindung wird jedoch vorgeschlagen, als Schalter ein Flip-Flop 4 zu benutzen, das durch IR-Strahlen gesetzt wird. Der Benutzer führt einen kleinen IR-Sender 5 mit sich, der mit einer IR-Strahlen abgebenden LED 6 ausgerüstet ist. Die Strahlen der LED 6 fallen auf einen innerhalb des Fahrzeuges angeordneten Empfänger 7, dem ein IR-erkennendes elektronisches Bauteil 8 nachgeschaltet ist, welches das Flip-Flop 4 steuert. Das Flip-Flop 4 kann somit vom Benutzer von außerhalb des Fahrzeuges gesetzt werden, z.B. durch die geschlossenen Fensterscheiben hindurch, nachdem das Fahrzeug nach dem Aussteigen der Insassen zur Ruhe gekommen ist.

Kernstück der Anlage ist der Rüttelkontakt 1;2;3. Die an seinem Empfänger 2 anstehende wechselnde Spannung (beim Rütteln) wird einer Schalteinheit 9 zugeführt, in welcher auch ein Schalter 10 enthalten ist, der in der vorstehend geschilderten Weise von dem Flip-Flop 4 geschaltet wird. In der Verbindung vom Rüttelkontakt zur Schalteinheit 9 ist noch ein Kondensator 11 vorgesehen, mit dem der Gleichspannungsanteil aus der von dem Empfänger 2 gelieferten Spannung ausgefiltert wird, so daß nur eine von einem Rütteln am Fahrzeug herrührende, in ihrer Höhe wechselnde Spannung zur Schalteinheit 9 weitergeleitet wird.

Von der Schalteinheit 9 verläuft ein Stromkreis über einen Timer 12 zur Endstufe 13, mit welcher eine Hupe 14, ein Lautsprecher oder dgl. betrieben wird, die das akustische Alarmsignal aussendet. Am Timer 12 kann die Zeitdauer des Alarmsignales voreingestellt werden.

Außerdem ist in der Endstufe 13 noch ein Schalter 15 vorgesehen, der ebenfalls von dem Flip-Flop 4 geschaltet wird und dazu dient, den Alarm von außerhalb der Fahrzeuges auszuschalten.

Eine optische Anzeige 16 des Betriebszustandes der Alarmanlage ist ebenfalls vorgesehen. Z.B. können verschiedenfarbige LED anzeigen, ob die Anlage ausgeschaltet oder eingeschaltet ist. Dabei wird insbesondere vorgeschlagen, die den Einschaltzustand anzeigende LED über ein RC-Glied nach ca. 30 s wieder auszuschalten, damit für Dritte von außen nicht erkennbar ist, daß die Alarmanlage eingeschaltet ist.

Die Alarmanlage funktioniert mithin in folgender Weise: Nachdem alle Insassen das Fahrzeug verlassen haben und alle Türen geschlossen sind, betätigt der Fahrer seinen IR-Sender 5 in der Weise, daß die von der LED 6 ausgehenden IR-Strahlen durch eine Fensterscheibe hindurch etwa auf den Empfänger 7 fallen. Damit wird das Flip-Flop 4 in denjenigen Zustand gesetzt, in dem die Schalter 10 und 15 geschlossen sind. Die Alarmanlage ist nunmher funktionsbereit.

Diese Funktionsbereitschaft wird von der optischen Anzeige 16 angezeigt, in der die entsprechende LED ca. 30 s aufleuchtet, so daß sich der Fahrer von dem eingeschalteten Zustand der Anlage überzeugen kann. Danach verlischt diese LED wieder.

Wird nun an dem Fahrzeug in unbefugter Weise hantiert, so spricht der Rüttelkontakt 1;2;3 an und schaltet über die Schalteinheit 9 und die Endstufe 13 die Hupe 14 ein und löst somit den Alarm aus.

Durch erneute Betätigung des Senders 5 kann das Flip-Flop 4 von außerhalb des Fahrzeuges wieder in diejenige Stellung geschaltet werden, in der die Schalter 10;15 geöffnet sind und damit die Alarmanlage abgeschaltet ist.

Die Funktionszustände der Alarmanlage können dabei jeweils von der optischen Anzeige 16 abgelesen werden.

Ansprüche

1.    Rüttelkontakt zur Erzeugung eines elektrischen Signales in Abhängigkeit von einer plötzlichen Bewegung des Kontaktes, gekennzeichnet durch

a    eine Lichtquelle (1),

b    einen Empfänger (2) für mindestend einen Teil der von der Lichtquelle ausgesandten Strahlen, und

c    einen Behälter (3) mit einer Flüssigkeit (3a), der zwischen der Lichtquelle (1) und dem Empfänger (2) in einer solchen Weise angeordnet ist, daß bei einer plötzlichen Bewegung des Kontaktes mindestens ein Teil der Lichtstrahlen durch die aus diesem Grunde schwingende Flüssigkeit (3a) zu dem Empfänger (2) verläuft.

2.    Rüttelkontakt nach Anspruch 1, dadurch gekennzeichnet, daß der Behälter (3) aus einem durchsichtigen Material besteht und die Lichtquelle (1) und der Empfänger (2) außerhalb des Behälters angeordnet sind.

3.    Rüttelkontakt nach Anspruch 1, dadurch gekennzeichnet, daß die Lichtquelle (1) einerseits und der Empfänger (2) andererseits in einander gegenüberliegenden Wänden des Behälters angeordnet sind.

0152817

4.      Alarmanlage zur Sicherung von Geräten gegen Fortbewegung und/oder unbefugte  Fremdeinwirkungen, insbesondere
zur Sicherung von Kraftfahrzeugen gegen Diebstahl,
dadurch gekennzeichnet, daß in der Schaltung der Alarmanlage ein Rüttelkontakt nach einem der Ansprüche 1 - 3
als Auslösekontakt verwendet ist.


5.      Alarmanlage nach Anspruch 4, für Kraftfahrzeuge,
dadurch gekennzeichnet, daß die Anlage mittels eines
außen am Fahrzeug angebrachten Schalters einschaltbar ist.


6.      Alarmanlage nach Anspruch 4 für Kraftfahrzeuge,
dadurch gekennzeichnet, daß die Alarmanlage in ihrer
Schaltung als Ein- und Ausschalter einen IR-Schalter (4;8)
enthält, der in einer solchen Weise am Kraftfahrzeug angebracht ist, daß er durch von außen auf das Kraftfahrzeug
gerichtete IR-Strahlen schaltbar ist.


7.      Alarmanlage nach Anspruch 6, dadurch gekennzeichnet,
daß die Alarmanlage in ihrer Schaltung ein Verzögerungsglied enthält, das die vom Rüttelkontakt (1;2;3) kommenden
Signale erst nach einer vorbestimmten Zeitverzögerung
nach Einschalten der Anlage wirksam werden läßt.

8.      Alarmanlage nach den Ansprüchen 5 - 7, dadurch gekennzeichnet, daß in dem Kraftfahrzeug von außen sichtbare Anzeigemittel (16) vorgesehen sind, welche den Einschaltzustand bzw. den Ausschaltzustand der Alarmanlage erkennen lassen.

9.      Alarmanlage nach Anspruch 8, dadurch gekennzeichnet, daß die Anzeigemittel in der Weise von einem Zeitglied gesteuert werden, daß das den Einschaltzustand anzeigende Mittel nach einer vorbestimmten Zeit erlischt.

*Fig.1a*    *Fig.1b*

1    3  3a    2        1  3a  3    2

1    3    3a        1    3    3a  2

*Fig.1c*    *Fig.1d*

Fig. 2

## EUROPÄISCHER RECHERCHENBERICHT

**Europäisches Patentamt**

Nummer der Anmeldung

EP 85 10 0853

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 001 001 (INTERCOUNTRY IMPORTS) <br> * Figur 21; Seite 60, Zeile 12 - Seite 61, Zeile 7 * | 1 | B 60 R 25/10 <br> H 01 H 35/14 |
| A | | 2,3 | |
| | --- | | |
| Y | DE-A-2 652 021 (A. SPRENGER KG) <br> * Seite 2, Zeilen 14-23 * | 1 | |
| | --- | | |
| A | EP-A-0 011 087 (R. BOSCH) <br> * Figur 1; Zusammenfassung * | 4 | |
| | --- | | |
| A | DE-A-2 848 533 (R. BOSCH) <br> * Seite 3, Zeile 3 - Seite 4, Zeile 8; Figuren 1,2; Zusammenfassung; Seite 6, Zeile 29 - Seite 7, Zeile 4 * | 5,6,8 | RECHERCHIERTE SACHGEBIETE (Int. Cl.4) |
| | --- | | B 60 R 25/10 <br> H 01 H 35/14 <br> H 03 K 17/96 |
| A | GB-A-1 126 320 (W.S. WIGGINS) <br> * Figur 2; Seite 2, Zeilen 60-70 * | 7 | |
| | --- | | |
| A | PATENT ABSTRACTS OF JAPAN, Band 2, Nr. 49, 6. April 1978, Seite 710 E 78; & JP-A-53-11076 (TATEISHI DENKI K.K.) 02-01-1978 | | |
| | ----- | | |

Der vorliegende Recherchenbericht wurde für alle Patentansprüche erstellt.

| Recherchenort <br> BERLIN | Abschlußdatum der Recherche <br> 03-05-1985 | Prüfer <br> BREUSING J |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82